# EUROPEAN PATENT SPECIFICATION

(11) **EP 1 929 403 B1**
(45) Date of publication and mention of the grant of the patent: **25.07.2012**
(21) Application number: 05784494.6
(22) Date of filing: 20.09.2005
(51) Int. Cl.: G06F 13/16

(54) **A DEVICE HAVING A LOW LATENCY SINGLE PORT MEMORY UNIT AND A METHOD FOR WRITING MULTIPLE DATA SEGMENTS TO A SINGLE PORT MEMORY UNIT**
EINRICHTUNG MIT EINER EINPORT-SPEICHEREINHEIT MIT NIEDRIGER LATENZ UND VERFAHREN ZUM SCHREIBEN MEHRERER DATENSEGMENTE IN EINER EINPORT-SPEICHEREINRICHTUNG
DISPOSITIF COMPRENANT UNE UNITE MEMOIRE MONOPORT A FAIBLE TEMPS D'ATTENTE POUR L'ECRITURE DE MULTIPLES SEGMENTS DE DONNEES DANS UNE UNITE MEMOIRE MONOPORT

(43) Date of publication of application: 11.06.2008
(73) Proprietor: Freescale Semiconductor, Inc., Austin, TX 78729 (US)
(72) Inventor: GLICKMAN, Eran, 75296 Reshon Letzion (IL); LESZKOWICZ, Adriano, 75420 Reshon Letzion (IL); SHEFFER, Noam, 69126 Tel Aviv-Yaffo (IL)
(74) Representative: Ferro, Frodo Nunes
(86) International application number: PCT/IB2005/053078
(87) International publication number: WO 2007/034263

(56) References cited:
- US-A- 5 706 482
- US-B1- 6 477 598
- US-B1- 6 523 098
- PATENT ABSTRACTS OF JAPAN vol. 2003, no. 12, 5 December 2003 (2003-12-05) & JP 2003 271378 A (FUJI XEROX CO LTD), 26 September 2003 (2003-09-26)

## Description

### FIELD OF THE INVENTION

The invention relates to a device having a low latency single port memory unit and a method for writing multiple data segments to a single port memory unit.

### BACKGROUND OF THE INVENTION

Various memory units and memory unit configurations are known in the art. The following U.S. patents and U.S. published patent applications provide a description of some prior art memory units and methods for accessing memory units: U.S. patent 6341047 of Keay et al., U.S. patent 6781857 of Lien et al., U.S. patent 6779061 of Swindel et al., U.S. patent 6747978 of Lew, U.S. patent 6654861 of Mora, U.S. patent 6615296 of Daniel, U.S. patent application publication number 2003/0182517 of Gooch, U.S. patent application publication number 2003/0110364 of Tang et al., U.S. patent application publication number 2005/0036400 of Chen, U.S. patent application publication number 2005/00005069 of Au et al., U.S. patent application publication number 2004/0251932 of Ma, U.S. patent application publication number 2004/0247122 of Hobrock et al., U.S. patent application publication number 2004/0047209 of Au, U.S. patent application publication number 2004/0019743 of Au, U.S. patent application publication number 2003/0229734 of Chang, U.S. patent application publication number 2003/0221078 of Jeddeloh, U.S. patent application publication number 2003/0182517 of Gooch, U.S. patent application publication number 2003/0110364 of Tang, U.S. patent application publication number 2003/0086485 of Lin, U.S. patent application publication number 2003/0061547 of Bartling, U.S. patent application publication number 2003/0023819 of Peel and U.S. patent application publication number 2003/0018867 of Mora.

Many modern integrated circuits include multiple components that have to cooperate with each other. Typically, a single memory unit is shared by multiple components such as processors, data transmitters, data receivers, data transceivers and the like.

In order to reduce latencies that can result from multiple accesses to the same memory unit, various solutions were introduced. A first prior art solution involves using a multiple port memory unit, such as a dual port RAM. A dual port RAM can handle two simultaneous access requests. This solution has one major drawback as the memory cells of a multiple port RAM are significantly larger than those of single port RAM.

Another prior art solution includes introducing a relatively long pipelined sampling unit that samples the multiple access requests and sends them to the single port RAM. This solution introduces an unknown access latency, and requires to apply a complex tracking mechanism in order to know the state of the access requests. This solution may require many registers that are also relatively big.

### SUMMARY OF THE PRESENT INVENTION

Patent Abstracts of Japan, vol. 2003, no. 12, 5 December 2003 & JP 2003/271378 A (Fuji Xerox Co Ltd) describes a FIFO type storage device using a single port memory wherein n pieces of data can be inputted in the single port RAM by a control part within one cycle. US 6,477,598 B1 describes a memory controller for controlling a multiple bank DRAM whereby an SDRAM is accessed for read/write operations through transaction processor state machines and a DMA or requesting device may receive a signal that a read or write request will not be fulfilled if all transaction processor state machines are found busy and to retry the transactions at a later time if the transaction is to be processed.

There is a need to provide an efficient device and method for accessing a single port memory unit.

The invention defines a device having a low latency single port memory unit according to claim 1 and a method for writing multiple data segments to a single port memory unit according to claim 10.

### BRIEF DESCRIPTION OF THE DRAWINGS

The present invention will be understood and appreciated more fully from the following detailed description taken in conjunction with the drawings in which:
FIG. 1 illustrates a telecommunication device, according to an embodiment of the invention;
FIG. 2 illustrates a single port memory unit and an access logic, according to an embodiment of the invention;
FIG. 3 illustrates various portions of the access logic, according to an embodiment of the invention;
FIG. 4 illustrates a timing diagram, according to an embodiment of the invention; and
FIG. 5 is a flow chart of a method for writing multiple data segments to a single port memory unit, according to an embodiment of the invention.

### DETAILED DESCRIPTION OF THE DRAWINGS

The invention defines a device that has a low latency single port memory unit and a method for writing multiple data segments to a single port memory unit. The device can be an integrated circuit such as but not limited to a telecommunication integrated circuit, but this is not necessarily so. The device can also include one or more integrated circuits or even other components, housing, power supply units and the like.

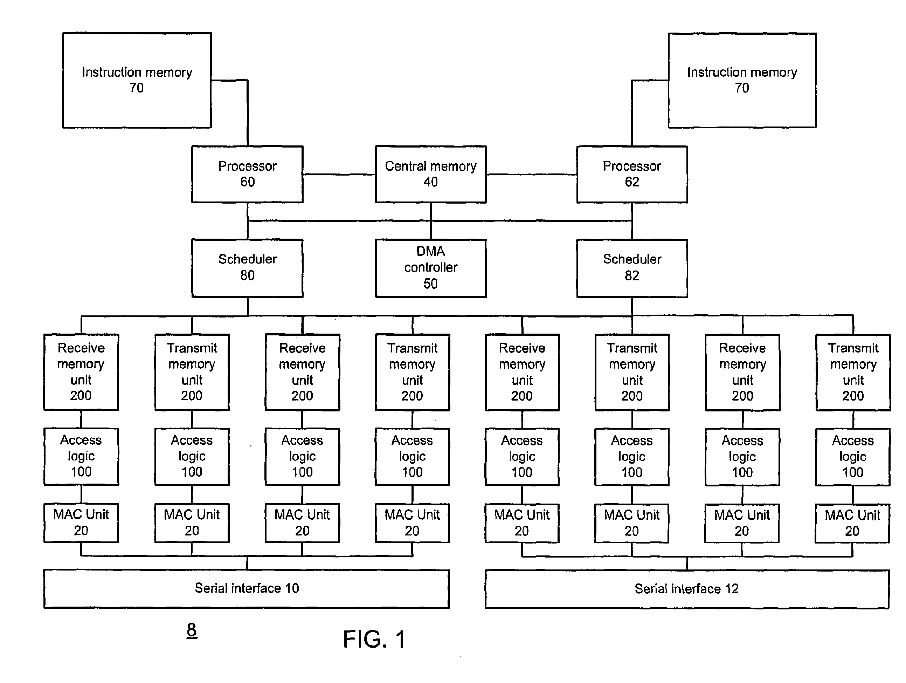

FIG. 1 illustrates a telecommunication device 8, according to an embodiment of the invention.

The telecommunication device 8 is adapted to assemble and disassemble time division multiplexed (TDM) lines. It is connected to multiple data receivers (also referred to as data targets) and transmitters (also referred to as data sources). Device 8 is adapted to use routing tables in order to support a large number of TDM lines. It is noted that the device 8 can also include at least one of the data targets and/or data sources.

Device 8 includes two serial interfaces 10 and 12, two processors 60 and 62, a central memory 40, two instruction memories 70 and 72, two schedulers 80 and 82, a direct memory access controller 50, multiple receive and transmit MAC layer units 20, multiple receive and transmit memory units 200 and associated access logics 100.

The two processors 60 and 62 can access the central memory 40. Each processor (out of 60 and 62) can access its own instruction memory (70 and 72 accordingly). The two schedulers 80 and 82 can control the access of the processors to the memory units 200 and can also prevent a write request from a transmit memory unit to be sent to the processor when the read memory receives data segments.

Receive memory units receive data segments and data segment write requests from data sources. They decide which data segments to provide to the processors 60 and 62, via schedulers 80 and 82. The data segments are eventually read by processors 60 and 62. The transmit memory units receive status information from data sources. This status information is related to data to be transmitted from device 8 to data targets.

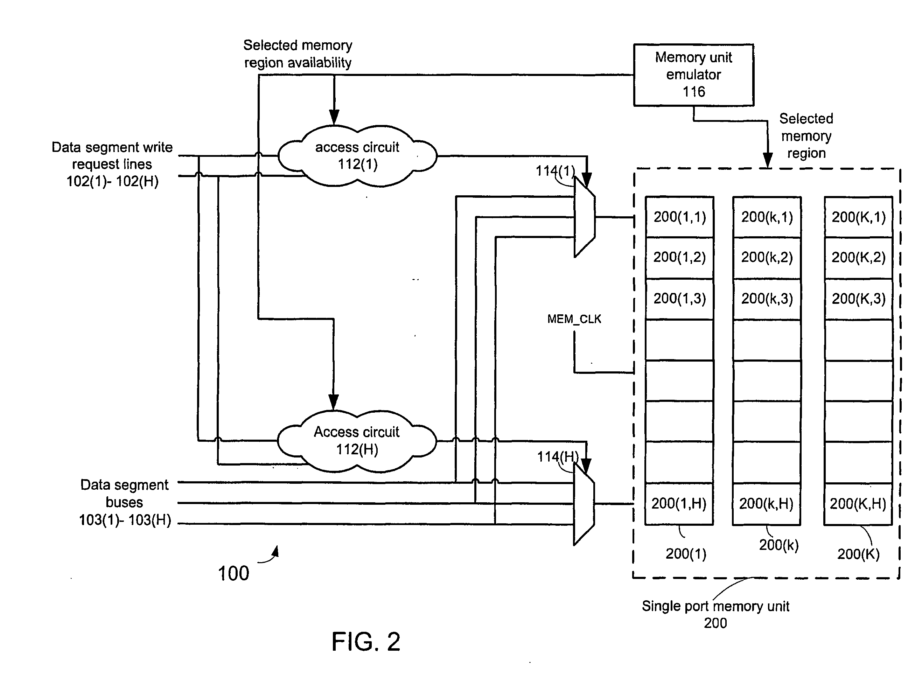

FIG. 2 illustrates a single port memory unit 200 and an access logic 100, according to an embodiment of the invention.

The single port memory unit 200 includes multiple (K) memory regions (200 (1) - 200 (K)), wherein each memory region is adapted to receive multiple data segments in parallel. The k'th memory region (wherein k is an index that ranges between 1 and K) is denoted 200(k). Each memory region includes H memory segments.

FIG. 2 illustrates three memory regions 200(1), 200(k) and 200(K) and their memory segments 200(1,1) - 200(1,H), 200 (k, 1) - 200(k,H) and 200 (K, 1) - 200(K,H).

It is noted that K can exceed and even well exceed two and that k does not necessarily differ from 1 or K. Index k is a positive integer that wraps around when it reaches K. Conveniently, each memory region is a memory line.

The single port memory unit 200 as well as the access logic 100 receives a memory clock signal MEM_CLK characterized by a memory clock cycle. Conveniently this clock cycle is much faster than the clock cycles provided to the data sources. Typically the ratio between these clock cycles is about the number (H) of data sources. This clock signal can be provided to other components of device 8.

The single port memory unit 200 is connected to an access logic 100. The access logic 100 is adapted to receive multiple data segment write requests 102(1) - 102(H) from multiple data sources 300(1)-300(H). The access logic 100 includes multiple access circuits 112(1) - 112(H). The access logic 100 is adapted to write, during a first memory clock cycle, multiple data segments to a certain memory region 200(k) in response to the availability of that certain memory region.

The access logic 100 is also adapted to temporarily store rejected data segment write requests (for a short while) and to write, during a second memory clock cycle, at least the rejected data segments, to another memory region 200(k+1).

Thus, the single port memory unit 200 and the access logic provide a short latency path of up to two memory clock cycles.

It is noted that if all the data segment write requests were accepted during the first memory clock cycle then all the associated data segments are written to the certain memory region.

FIG. 2 illustrates an access logic 100, according to an embodiment of the invention.

Access logic 100 includes multiple access circuits 112(1) - 112(H), multiple input multiplexers 114(1) - 114(H) and a memory unit emulator 116.

The memory unit emulator 116 emulates the state of the single port memory unit 200 and selects which memory region to access during a certain clock cycle.

The memory unit emulator 116 also provides indications reflecting the availability of the selected memory region to the access circuits 112(1)-112(H). These circuits respond to this information by sending data segments only to available memory segments of the selected memory region.

Each access circuit is connected to all the data segment write request lines 102(1)- 102(H) and each H-input multiplexer out of H-input multiplexers 114(1) - 114(H) receives all the data segments (via lines 103(1)-103(H)) from data sources 300(1) - 300(H).

The h'th H-input multiplexer 114(h) is controlled by the h'th access circuit 112(h). Index h ranges between 1 and H.

Each H-input multiplexer can write a data segment to a certain memory segment. The h'th H-input multiplexer 114(h) can provide data segments to the h'th memory segment of the selected memory region.

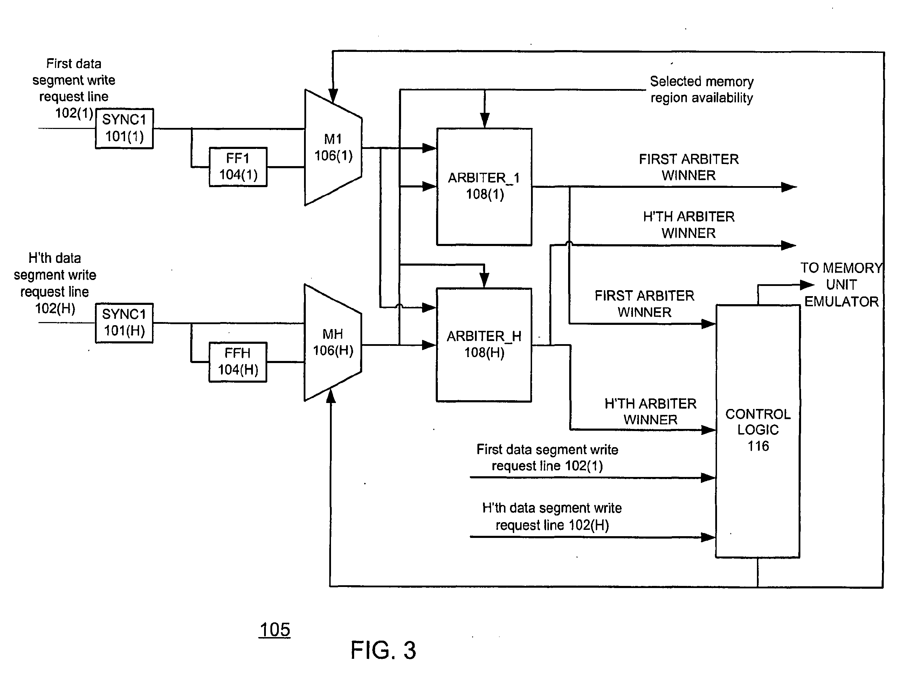

FIG. 3 illustrates a portion 105 of the access logic 100, according to an embodiment of the invention.

Portion 105 includes H synchronization units SYNC1-SYNCH 101(1) - 101(H), H flip-flops FF1 - FFH 104(1) - 104(H), H dual-input multiplexers M1-MH 106(1) - 106(H), H arbiters 108(1) - 108(H) and a control logic 116.

For simplicity of explanation FIG. 3 only illustrates the first data segment request line 102(1), the first flip flop FF1 104(1), the first dual-input multiplexer M1 106(1), the first arbiter 108(1), the H'th data segment request line 102(H), the H'th flip flop FFH 104(H), the H'th dual-input multiplexer MH 106(H) and the H'th arbiter 108(H).

The first data segment write request line 102(h) is connected to a first synchronizer for adapting the data segment write requests to CLK_MEM.

The first synchronizer SYNC(1) is followed by the first dual input multiplexer M1 106(1) and by the first flip flop FF1 104(1). The first flip-flop FF1 104(1) provides a single clock cycle memory. If the first data segment write request was rejected during a certain memory clock cycle, the request is still pending during the next memory clock cycle.

The first dual-input multiplexer M1 106(1) is controlled by control logic 116 and can select between a current value of the data segment write request line or a previous value of that line. The previous write request (a rejected data segment write request) is stored at the first flip flop FF1 104(1).

The h'th arbiter 108(h) controls the h'th H-input multiplexer 114(1). Each arbiter out of arbiters 108(1) - 108(H) receives the outputs of all the dual-input multiplexers 106(1) - 106(H).

Each arbiter also receives a selected memory region availability information. If a memory segment of that selected memory region is available then the arbiter can apply an arbitration scheme in order to select one data segment write request. Conveniently, different arbiters apply different arbitration schemes. If the relevant memory segment is not available then the arbiter does not select any data segment write request.

The first arbiter 108(1) generates a first arbiter winner signal to indicate which data segment write request it selected. The H'th arbiter 108(H) generates an H arbiter winner signal to indicate the data segment write request it selected. These signals are provided to the H input multiplexers 114(1) - 114(H) and to the control logic 116.

The control logic 116 also receives the data segment write requests (from the output of SYNC1 -SYNCH) and can determine which (if any) data segment write request was accepted and which was rejected. The control logic 116 also sends to the memory unit emulator 116 information representative of the granted (accepted) data segment write requests.

According to various embodiments of the invention the arbiters can apply various arbitration mechanisms. The arbitration mechanisms can be different from each other and are conveniently adapted to prevent the occurrence of multiple simultaneous grants to a single data segment write request.

The following example will illustrate an exemplary arbitration mechanism. The first arbiter 108(1) grants the h'th data segment write request if (i) the first memory segment of the relevant memory region is available, and (ii) it did not receive any of the first till (h-1)'th data segment write requests. The second arbiter 108(2) grants the h'th data grant request if: (i) the second memory segment of the relevant memory region is available, (ii) it did not receive any of the first till (h-1)'th data segment write requests, and (iii) the first arbiter 108(1) did not grant the h'th data segment write request during this memory clock cycle.

As illustrated by FIG. 1 the single port memory unit 200 is also connected to a data retrieval circuit such as scheduler 80. The data retrieval circuit can be a direct memory controller, a processor or another data target.

Conveniently, the memory retrieval circuit 80 is adapted to retrieve data segments from the single port memory unit 200 at a retrieval order that is substantially equal to a writing order of the data segments to the single port memory unit 200. Thus, the single port memory unit is used as a FIFO memory.

Conveniently, the memory retrieval unit 80 sends read requests to the access logic 100 and the access logic 100 prevents data retrieval from the single port memory unit 200 during a write operation.

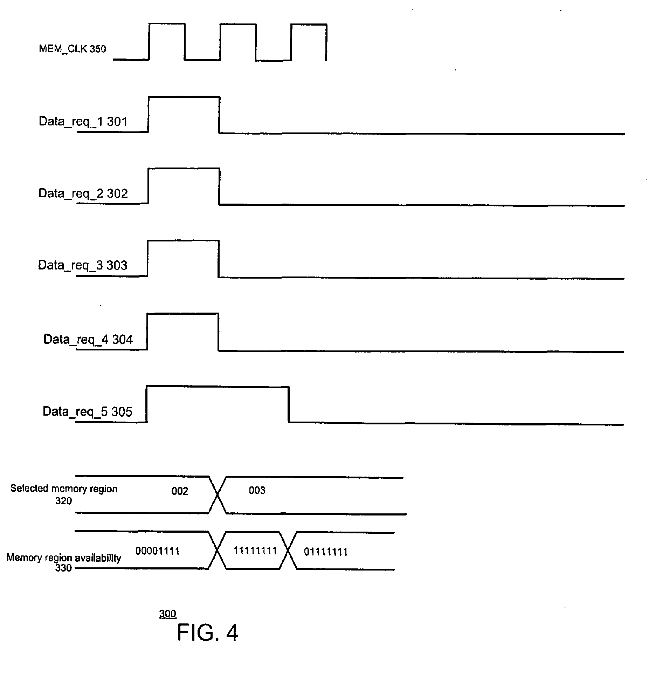

FIG. 4 is a timing diagram 300 illustrating multiple data segment write requests, according to an embodiment of the invention.

It is assumed that H=8, that k=2 (the second memory region is being accesses), and that the fifth till eighth memory segments of the second data region are empty.

At a first clock cycle five data segment write requests are received. They are denoted as data_req_1 - data_req_5 301-305. During this first clock cycle the first four data requests are accepted, the fifth data segment request is rejected and the second memory region is filled. Thus, the access logic selects the third memory region as the next memory region to write to, and the fifth data segment write request is stored at flip flop FF5.

At the next clock cycle the fifth data segment write request is granted (and signal 305 is negated) and the data corresponding to this request is written to the first memory segment of the third memory region.

The selected memory region is represented by the selected memory region signal 320. The availability of the selected memory region is illustrated by memory region availability signal 330 in which "1" illustrates an empty memory segment.

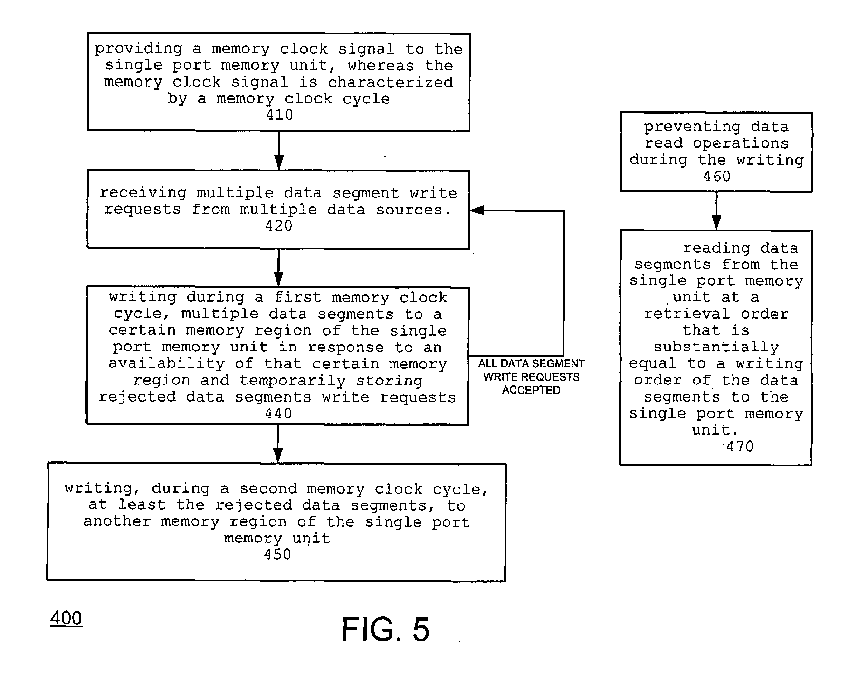

FIG. 5 is a flow chart of a method 400 for writing multiple data segments to a single port memory unit, according to an embodiment of the invention.

Method 400 starts by stage 410 of providing a memory clock signal to the single port memory unit, wherein the memory clock signal is characterized by a memory clock cycle. Conveniently, stage 410 includes providing a memory clock signal that is significantly faster than a clock signal provided to the data sources.

Stage 410 is followed by stage 420 of receiving multiple data segment write requests from multiple data sources. Each data segment write request is associated with a data segment that can be directly provided to the single port memory unit. If the associated data segment write requests are granted at the same clock cycle they are detected. The data segment write requests can be stored for one memory clock cycle if the data segment write requests are rejected and then (at a consecutive memory clock cycle) are provided to the single port memory unit.

Conveniently, in order to synchronize requests originating from the data sources to the memory, stage 420 can include synchronizing the data segment write requests to provide synchronized data segment write requests. The synchronization can involve sampling of requests, applying a differential operation on requests and the like.

The availability of the memory region can be tracked by monitoring the data segment grants, counting the grants and comparing the granted requests to the number of memory segments (to determine the available segments within a currently accesses memory region) and to the number of memory regions (to determine which memory region should be accessed).

The counting operations effectively defines the next available memory segments as the data segments are consecutively written to memory segments.

The counting operations will be illustrated by the following example. It is assumed that there are eight memory segments per memory region, that there are thirty two memory regions, and that the initial stage of the single port memory unit is empty. If twelve data segment write requests were granted then the current memory region is the second memory region and it has four empty memory segments.

Conveniently, the single port memory unit operates as a FIFO. Thus, a write pointer points to the current vacant (available) memory region. Once a certain current region is filled with data the memory writes data segments to the next memory region.

Stage 420 is followed by stage 440 of writing, during a first memory clock cycle, multiple data segments to a certain memory region of the single port memory unit in response to an availability of that certain memory region and temporarily storing rejected data segment write requests. If all the pending data segment write requests were granted then stage 440 is followed by stage 420.

If some pending data segment write requests were rejected then stage 440 is followed by stage 450 of writing, during a second memory clock cycle, at least the rejected data segments, to another memory region of the single port memory unit. Conveniently, data segment write requests were rejected if the certain memory region is full.

Conveniently, stage 450 includes determining the availability of a certain memory region of the single port memory unit by checking an emulated the state of the certain memory region. The state is updated whenever a date segment write request is granted.

Stage 450 can include writing only the rejected data segments or can include writing additional data requests that correspond to data segment write requests received during the second clock cycle. According to an embodiment of the invention two consecutive data segment write requests from the same data source are separated by at least one memory clock cycle. Thus, there is a need to store a rejected data segment write request for only one clock cycle.

Conveniently, stage 450 includes updating the emulated state of the other memory region in response to the granted date segment write requests.

Stage 450 is followed by stage 420.

Conveniently, stages 440 and 450 include selecting (arbitrating) between simultaneously received data segment write requests.

According to an embodiment of the invention stages 440 and 450 include applying different arbitration rules for each memory segment of a memory region. Conveniently, these arbitration rules enable to select the h highest priority data segment write requests when there are h available data segments within a currently accessed memory region.

Stages 410-450 illustrate writing operations to the single port memory unit. In addition to the writing operations the data has to be read from the memory unit. A single port memory unit has to coordinate between the writing and reading operations as it can allow only one of said operations per clock cycle.

Thus, method 400 is also illustrated as including read related stages such as stages 460 and 470.

According to an embodiment of the invention, in order to maintain a short write latency of one or two memory cycles, the write operations have a higher priority than the read operations. Conveniently, method 400 includes stage 460 of preventing data read operations during the writing.

Data can be read from the single port memory unit in various manners.. According to one embodiment of the invention the single port is used as a first in first out (FIFO) memory unit, but this is not necessarily so.

Thus, method 400 can include stage 470 of reading data segments from the single port memory unit at a retrieval order that is substantially equal to a writing order of the data segments to the single port memory unit.

## Claims

1. A device (8), comprising a single port memory unit (200) that comprises multiple memory regions (200 (1) - 200(K)), wherein each memory region is adapted to receive multiple data segments in parallel; wherein the single port memory unit (200) receives a memory clock signal;
**characterized by** comprising access logic (100) adapted to receive multiple data segment write requests from multiple data sources; to write, during a first memory clock cycle, multiple data segments to a certain memory region (200 (k)) in response to an availability of the certain memory region; to temporarily store rejected data segments; to write, during a second memory clock cycle, at least the rejected data segments, to another memory region (200(k+1)).

2. The device (8) according to claim 1 wherein the memory clock signal cycle is much shorter than a clock cycle of a clock signal provided to the multiple data sources.

3. The device (8) according to any of claims 1 or 2, wherein the access logic (100) comprises at least one arbitrator (108) for arbitrating between simultaneously received data segment write requests.

4. The device (8) according to claim 3 wherein the access logic (110) comprises an arbitrator for each segment of a memory region.

5. The device (8) according to claim 4 wherein the access logic (100) is adapted to select multiple data segment write requests from a single source during a single memory clock cycle.

6. The device (8) according to any claim of claims 1-5 wherein the access logic (100) is adapted to determine the availability of the certain memory region by emulating the state of the certain memory region.

7. The device (8) according to any claim of claims 1- 6 further comprising a memory retrieval circuit (92) adapted to retrieve data segments from the single port memory unit (200) at a retrieval order that is substantially equal to a writing order of the data segments to the single port memory unit (200).

8. The device (8) according to any claim of claims 1-7 wherein the access logic (100) is further adapted to prevent data retrieval from the single port memory unit (200) during a write operation.

9. The device (8) according to any of claims 1-8 wherein the single port memory unit (200) is a RAM unit.

10. A method (400) for writing multiple data segments to a single port memory unit, the method (400) comprising:
providing (410) a memory clock signal to the single port memory unit and receiving (420) multiple data segment write requests from multiple data sources; **characterized by** writing (440), during a first memory clock cycle, multiple data segments to a certain memory region of the single port memory unit in response to an availability of the certain memory region and temporarily storing rejected data segments; and writing (450), during a second memory clock cycle, at least the rejected data segments to another memory region of the single port memory unit.

## Patentansprüche

1. Einrichtung (8), umfassend eine Einzelport-Speichereinheit (200), die mehrere Speicherregionen (200 (1) - 200 (K)) umfasst, wobei jede Speicherregion dazu ausgelegt ist, mehrere Datensegmente parallel zu empfangen; wobei die Einzelport-Speichereinheit (200) ein Speichertaktsignal empfängt;
**dadurch gekennzeichnet**, eine Zugriffslogik (100) zu umfassen, die dazu ausgelegt ist, mehrere Datensegment-Schreibanforderungen von mehreren Datenquellen zu empfangen; während eines ersten Speichertaktzyklus mehrere Datensegmente in eine bestimmte Speicherregion (200 (k)) als Reaktion auf eine Verfügbarkeit der bestimmten Speicherregion zu schreiben; zurückgewiesene Datensegmente vorübergehend zu speichern; während eines zweiten Speichertaktzyklus zumindest die zurückgewiesenen Datensegmente in einer anderen Speicherregion (200 (k+1)) zu speichern.

2. Die Einrichtung (8) gemäß Anspruch 1, wobei der Speichertaktsignalzyklus viel kürzer ist als ein Taktzyklus eines Taktsignals, das den mehreren Datenquellen zur Verfügung gestellt wird.

3. Die Einrichtung (8) gemäß einem der Ansprüche 1 oder 2, wobei die Zugriffslogik (100) zumindest einen Arbitrator (108) zum Arbitrieren zwischen gleichzeitig empfangenen Datensegment-Schreibanforderungen umfasst.

4. Die Einrichtung (8) gemäß Anspruch 3, wobei die Zugriffslogik (100) einen Arbitratror für jedes Segment einer Speicherregion umfasst.

5. Die Einrichtung (8) gemäß Anspruch 4, wobei die Zugriffslogik (100) dazu ausgelegt ist, während eines einzelnen Speichertaktzyklus mehrere Datensegment-Schreibanforderungen von einer einzelnen Quelle auszuwählen.

6. Die Einrichtung (8) gemäß einem der Ansprüche 1 bis 5, wobei die Zugriffslogik (100) dazu ausgelegt ist, die Verfügbarkeit der bestimmten Speicherregion durch Emulieren des Zustands der bestimmten Speicherregion zu bestimmen.

7. Die Einrichtung (8) gemäß einem der Ansprüche 1 bis 6, ferner umfassend eine Speicherabrufschaltung (92), die dazu ausgelegt ist, Datensegmente aus der Einzelport-Speichereinheit (200) in einer Abruf-Reihenfolge abzurufen, die im Wesentlichen gleich einer Schreib-Reihenfolge der Datensegmente in die Einzelport-Speichereinheit (200) ist.

8. Die Einrichtung (8) gemäß einer der Ansprüche 1 bis 7, wobei die Zugriffslogik (100) ferner dazu ausgelegt ist, Datenabruf aus der Einzelport-Speichereinheit (200) während einer Schreiboperation zu verhindern.

9. Die Einrichtung (8) gemäß einem der Ansprüche 1 bis 8, wobei die Einzelport-Speichereinheit (200) eine RAM-Einheit ist.

10. Verfahren (400) zum Schreiben von mehreren Datensegmenten in eine Einzelport-Speichereinheit, wobei das Verfahren (400) umfasst:
der Einzelport-Speichereinheit ein Speichertaktsignal zur Verfügung Stellen (410) und Empfangen (420) mehrerer Datensegment-Schreibanforderungen von mehreren Datenquellen; **gekennzeichnet durch** ein Schreiben (440) von mehreren Datensegmenten in eine bestimmte Speicherregion der Einzelport-Speichereinheit während eines ersten Speichertaktzyklus als Reaktion auf eine Verfügbarkeit der bestimmten Speicherregion und ein vorübergehendes Speichern von zurückgewiesenen Datensegmenten; und ein Schreiben (450) von zumindest den zurückgewiesenen Datensegmenten in eine andere Speicherregion der Einzelport-Speichereinheit während eines zweiten Speichertaktzyklus.

## Revendications

1. Dispositif (8) comprenant une unité de mémoire à un seul port (200) qui comporte de multiples zones de mémoire (200(1) à 200(K)), dans lequel chaque zone de mémoire est prévue pour recevoir de multiples segments de données en parallèle et dans lequel l'unité de mémoire à un seul port (200) reçoit un signal d'horloge de mémoire ;
**caractérisé en ce qu'**il comprend une logique d'accès (100) prévue pour recevoir de multiples requêtes d'écriture de segments de données en provenance de multiples sources de données ; pour écrire, pendant un premier cycle d'horloge de mémoire, de multiples segments de données dans une zone de mémoire donnée (200(k)) en réponse à une disponibilité de la zone de mémoire donnée ; pour stocker temporairement des segments de données rejetés ; et pour écrire, pendant un deuxième cycle d'horloge de mémoire, au moins les segments de données rejetés dans une autre zone de mémoire (200(k+1)).

2. Dispositif (8) selon la revendication 1, dans lequel le cycle du signal d'horloge de mémoire est bien plus court qu'un cycle d'horloge d'un signal d'horloge fourni aux multiples sources de données.

3. Dispositif (8) selon l'une quelconque des revendications 1 ou 2, dans lequel la logique d'accès (100) comprend au moins un dispositif d'arbitrage (108) pour effectuer un arbitrage entre des requêtes d'écriture de segments de données qui ont été reçues simultanément.

4. Dispositif (8) selon la revendication 3, dans lequel la logique d'accès (100) comprend un dispositif d'arbitrage pour chaque segment d'une zone de mémoire.

5. Dispositif (8) selon la revendication 4, dans lequel la logique d'accès (100) est prévue pour sélectionner de multiples requêtes d'écriture de segments de données en provenance d'une seule source pendant un seul cycle d'horloge de mémoire.

6. Dispositif (8) selon l'une quelconque des revendications 1 à 5, dans lequel la logique d'accès (100) est prévue pour déterminer la disponibilité de la zone de mémoire donnée en imitant l'état de la zone de mémoire donnée.

7. Dispositif (8) selon l'une quelconque des revendications 1 à 6, comprenant en outre un circuit de récupération en mémoire (92) prévu pour effectuer une récupération de segments de données à partir de l'unité de mémoire à un seul port (200) selon un ordre de récupération qui est sensiblement égal à un ordre d'écriture des segments de données dans l'unité de mémoire à un seul port (200).

8. Dispositif (8) selon l'une quelconque des revendications 1 à 7, dans lequel la logique d'accès (100) est en outre prévue pour empêcher la récupération de données à partir de l'unité de mémoire à un seul port (200) pendant une opération d'écriture.

9. Dispositif (8) selon l'une quelconque des revendications 1 à 8, dans lequel l'unité de mémoire à un seul port (200) est une unité RAM.

10. Procédé (400) d'écriture de multiples segments de données dans une unité de mémoire à un seul port, le procédé (400) comprenant : la fourniture (410) d'un signal d'horloge de mémoire à l'unité de mémoire à un seul port et la réception (420) de multiples requêtes d'écriture de segments de données en provenance de multiples sources de données ; **caractérisé en ce qu'**il comprend l'écriture (440), pendant un premier cycle d'horloge de mémoire, de multiples segments de données dans une zone de mémoire donnée de l'unité de mémoire à un seul port en réponse à une disponibilité de la zone de mémoire donnée et le stockage temporaire de segments de données rejetés ; et l'écriture (450), pendant un deuxième cycle d'horloge de mémoire, d'au moins les segments de données rejetés dans une autre zone de mémoire de l'unité de mémoire à un seul port.
